(19) 

Europäisches
Patentamt
European
Patent Office
Office européen
des brevets

(11) **EP 4 450 428 A1**

(12) **EUROPEAN PATENT APPLICATION**
published in accordance with Art. 153(4) EPC

(43) Date of publication:
**23.10.2024 Bulletin 2024/43**

(21) Application number: **22907239.2**

(22) Date of filing: **01.12.2022**

(51) International Patent Classification (IPC):
**B65G 43/00** (2006.01)     **G01N 21/84** (2006.01)
**G01N 21/954** (2006.01)

(52) Cooperative Patent Classification (CPC):
**B65G 43/00; G01N 21/84; G01N 21/954**

(86) International application number:
**PCT/JP2022/044459**

(87) International publication number:
**WO 2023/112711 (22.06.2023 Gazette 2023/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.12.2021 JP 2021205242**

(71) Applicant: **Nippon Electric Glass Co., Ltd.
Otsu-shi, Shiga 520-8639 (JP)**

(72) Inventor: **YONEZAWA Takehiro
Otsu-shi, Shiga 520-8639 (JP)**

(74) Representative: **Maiwald GmbH
Elisenhof
Elisenstraße 3
80335 München (DE)**

(54) **WORKPIECE TRANSPORT METHOD AND WORKPIECE TRANSPORT DEVICE**

(57) This workpiece transport method comprises an inspection unit transport step for transporting a workpiece W using an inspection unit transport device 14 in an inspection unit 12 that inspects the workpiece W. The inspection unit transport step in the method for transporting the workpiece W includes temporarily stopping the transport of the workpiece W at a first inspection position P1 where the workpiece W is to be inspected. The inspection unit transport step in the method for transporting the workpiece W may include reducing the transport speed of the workpiece W at the first inspection position P1 where the workpiece W is to be inspected.

FIG. 5

EP 4 450 428 A1

## Description

TECHNICAL FIELD

The present invention relates to a workpiece transport method and a workpiece transport apparatus.

BACKGROUND ART

Typically, a workpiece transport apparatus transports workpieces such as glass articles in an inspection section where the workpieces are inspected. Patent Literature 1 discloses an example of a workpiece transport apparatus that transports workpieces along an arc-shaped transport path.

CITATION LIST

Patent Literature

Patent Literature 1: Japanese Laid-Open Patent Publication No. 2018-017547

SUMMARY OF INVENTION

Technical Problem

When such a workpiece transport apparatus is used to inspect workpieces, for example, there is still room for improvement in increasing the workpiece inspection accuracy.

An object of the present invention is to provide a workpiece transport method and a workpiece transport apparatus that improve the workpiece inspection accuracy.

Solution to Problem

A method for transporting workpieces that solves the above problem includes an inspection section transporting step of transporting the workpieces in an inspection section, where the workpieces are inspected, with an inspection section transport device. The inspection section transporting step includes decreasing a transport speed of the workpieces at an inspection position where the workpieces are inspected or temporarily stopping transportation of the workpieces at the inspection position.

The above method for transporting workpieces may further include a loading step of continuously loading the workpieces to the inspection section with a conveyor device. In the inspection section transporting step, the transport speed of the workpieces to the inspection position may be higher than a loading speed of the workpieces in the loading step.

In the above method for transporting workpieces, the conveyor device and the inspection section transport device may each include supports that support the workpieces. The intervals between the supports of the conveyor device may be smaller than the intervals between the supports of the inspection section transport device.

In the above method for transporting workpieces, the inspection section transport device may include a holding unit arranged in correspondence with the inspection position to hold the workpieces, and a workpiece carrier that loads the workpieces to the holding unit and unloads the workpieces from the holding unit. In the inspection section transporting step, transportation of the workpieces may be temporarily stopped at the inspection position.

In the above method for transporting workpieces, the workpiece carrier may include a carrier support member that supports the workpieces. The carrier support member may be moved by a parallel crank mechanism.

In the above method for transporting workpieces, the inspection section transporting step may include a stopping phase in which actuation of the parallel crank mechanism is stopped.

In the above method for transporting workpieces, the inspection section transport device may transport the workpieces along an arc-shaped transport path.

In the above method for transporting workpieces, each of the workpieces may have an elongated shape and may be transported such that a longitudinal direction of the workpieces is orthogonal to a transport direction.

A workpiece transport apparatus includes an inspection section transport device that transports workpieces in an inspection section where the workpieces are inspected. The inspection section transport device decreases a transport speed of the workpieces at an inspection position where the workpieces are inspected or temporarily stops transportation of the workpieces at the inspection position.

Advantageous Effects of Invention

The present invention enables improvement of the accuracy in inspecting the workpieces.

BRIEF DESCRIPTION OF DRAWINGS

Fig. 1 is a plan view schematically showing a workpiece transport apparatus in accordance with a first embodiment.
Fig. 2 is a cross-sectional view taken along line 2-2 in Fig. 1.
Fig. 3 is a diagram illustrating operation of the workpiece transport apparatus.
Fig. 4 is a diagram illustrating operation of the workpiece transport apparatus.
Fig. 5 is a diagram illustrating operation of the workpiece transport apparatus.

Fig. 6 is a diagram schematically showing a workpiece transport apparatus in accordance with a second embodiment.

DESCRIPTION OF EMBODIMENTS

First Embodiment

A workpiece transport apparatus and a workpiece transport method in accordance with a first embodiment will now be described with reference to the drawings. For convenience of explanation, some of the elements may be illustrated in an exaggerated or simplified manner in the drawings. Further, elements in the drawings may not be to scale.

Overview of Workpiece Transport Apparatus

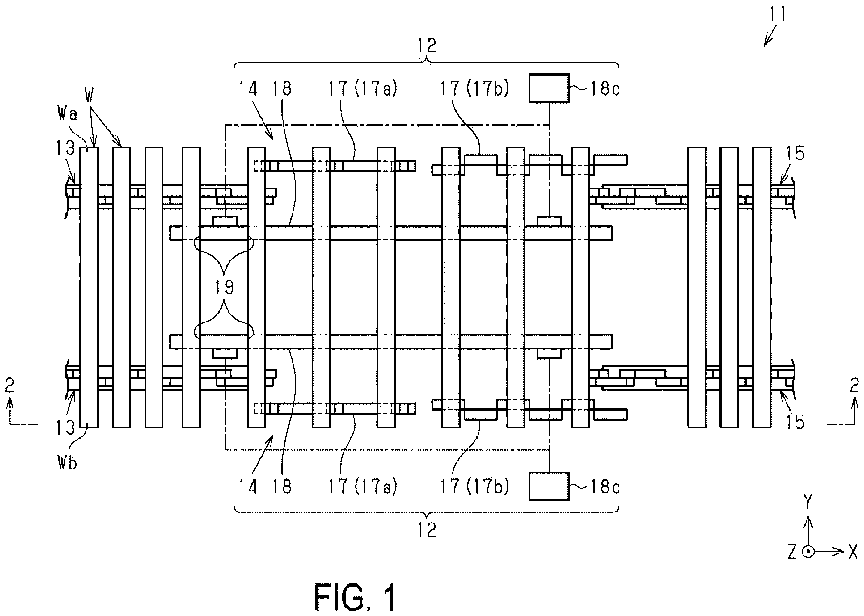

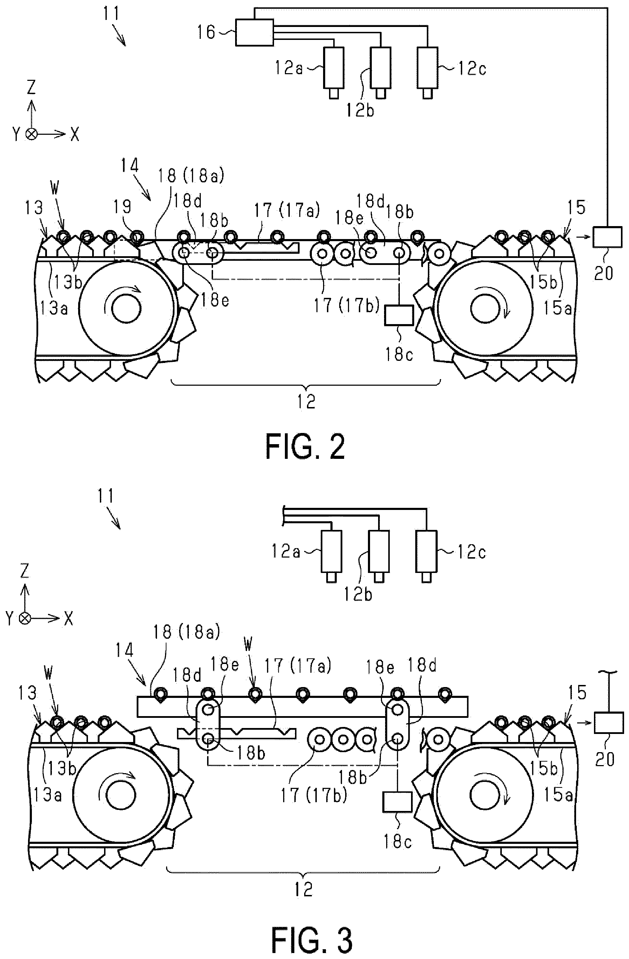

As shown in Figs. 1 and 2, a workpiece transport apparatus 11 includes an inspection section 12 where workpieces W are inspected and a first conveyor device 13 that transports the workpieces W to the inspection section 12. The workpiece transport apparatus 11 further includes an inspection section transport device 14 that transports the workpieces W in the inspection section 12. The workpiece transport apparatus 11 of the present embodiment further includes a second conveyor device 15 that transports the workpieces W unloaded from the inspection section 12. As shown in Fig. 2, the workpiece transport apparatus 11 further includes a controller 16.

As shown in Fig. 1, each workpiece W of the present embodiment has an elongated shape and includes a first end Wa and a second end Wb in a longitudinal direction. The workpiece transport apparatus 11 transports the workpieces W such that the longitudinal direction of each workpiece W is orthogonal to a transport direction in plan view. Specifically, the workpiece W of the present embodiment is a glass tube. The workpiece transport apparatus 11 transports the glass tubes such that the tube-axis direction of each glass tube is orthogonal to the transport direction. The X-direction shown in the drawings corresponds to the transport direction. The Y-direction shown in the drawing corresponds to the longitudinal direction of the workpiece W, or a direction parallel to the tube axis of the glass tube. The Z-direction corresponds to the vertical direction.

Inspection Section

As shown in Figs. 2 to 5, the inspection section 12 of the present embodiment includes a first image capturing device 12a, a second image capturing device 12b, and a third image capturing device 12c. The first image capturing device 12a, the second image capturing device 12b, and the third image capturing device 12c are arranged in this order from an upstream side with respect to the transport direction of the workpieces W.

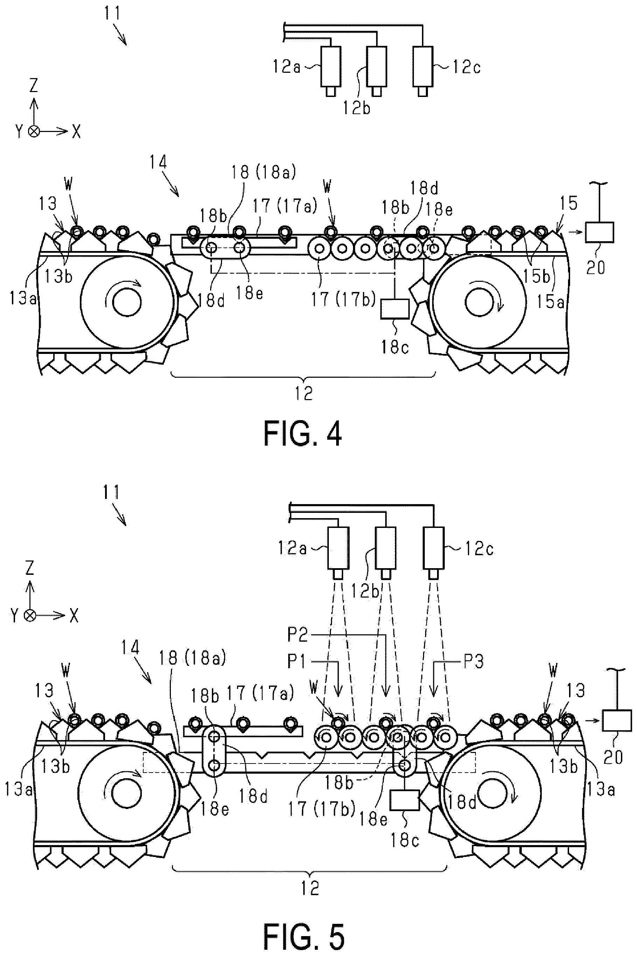

As shown in Fig. 5, the workpieces W are inspected at predetermined inspection positions in the inspection section 12. The workpiece W located at a first inspection position P1 is imaged by the first image capturing device 12a. The workpiece W located at a second inspection position P2 is imaged by the second image capturing device 12b. The workpiece W located at a third inspection position P3 is imaged by the third image capturing device 12c.

The first image capturing device 12a, the second image capturing device 12b, and the third image capturing device 12c capture images of the workpieces W for inspection. For example, the workpieces W are inspected for end-shape defects, cleanliness, and the like. The image capturing device may be, for example, a camera including an image capturing element such as CCD or CMOS. The inspection section 12 may include, for example, a lighting device arranged facing the image capturing device.

First Conveyor Device

As shown in Figs. 1 and 2, the first conveyor device 13 of the workpiece transport apparatus 11 is arranged at the upstream side of the inspection section 12. The first conveyor device 13 includes two first conveyor devices 13 respectively provided for the first end Wa and the second end Wb of the workpiece W. As shown in Fig. 2, each first conveyor device 13 includes an endless first belt 13a and first supports 13b arranged on the first belt 13a. The two first conveyor devices 13 transport the workpieces W such that the longitudinal direction of each workpiece W is orthogonal to the transport direction of the workpieces W in plan view. The first conveyor devices 13 of the present embodiment continuously transport the workpieces W to the inspection section 12 at a fixed speed.

Inspection Section Transport Device

As shown in Fig. 1, the inspection section transport device 14 of the workpiece transport apparatus 11 includes two inspection section transport devices 14 respectively provided for the first end Wa and the second end Wb of the workpiece W. As shown in Fig. 5, the inspection section transport devices 14 of the workpiece transport apparatus 11 temporarily stop transportation of the workpieces W at the first inspection position P1, the second inspection position P2, and the third inspection position P3. Further, the inspection section transport devices 14 transport the workpieces W to the first inspection position P1 at a higher transport speed than a loading speed at which the first conveyor device 13 transport the workpieces W to the inspection section 12.

As shown in Figs. 1 to 5, the inspection section transport device 14 of the present embodiment includes a holding unit 17 and a workpiece carrier 18. The holding unit 17 holds the workpieces W. The workpiece carrier 18 loads the workpieces W to the holding unit 17 and unloads the workpieces Wfrom the holding unit 17. The holding unit 17 includes a first holding portion 17a and a second holding portion 17b arranged at the downstream side of the first holding portion 17a. The second holding portion 17b is arranged in correspondence with the inspection positions where the workpieces W are inspected.

The first holding portion 17a holds one or more workpieces W in a state in which the workpieces W are stationary. The second holding portion 17b includes a rolling mechanism that rolls the workpieces W at the inspection positions. More specifically, the second holding portion 17b includes rotary bodies, and each workpiece W is held and rotated by two adjacent ones of the rotary bodies about the axis of the workpiece W. The glass tube, which is the workpiece W in the present embodiment, is rotated about the tube axis.

As shown in Figs. 2 to 5, the workpiece carrier 18 includes a carrier support member 18a that supports the workpieces W. The carrier support member 18a is moved by a parallel crank mechanism. More specifically, the workpiece carrier 18 includes two rotation shafts 18b and a drive unit 18c. The drive unit 18c drives and rotates at least one of the two rotation shafts 18b. Further, the workpiece carrier 18 includes two arms 18d and two coupling portions 18e. The two arms 18d are rotated by the two rotation shafts 18b. The two coupling portions 18e rotatably couple the arms 18d and the carrier support member 18a.

In this manner, the inspection section transport device 14 transports the workpieces W in the inspection section 12 by actuation of the parallel crank mechanism. Preferably, the inspection section transport device 14 has a stopping phase in which the actuation of the parallel crank mechanism is stopped during transporting the workpieces W.

The carrier support member 18a of the workpiece carrier 18 is configured to support more than one workpiece W. More specifically, as shown in Figs. 1 and 2, the carrier support member 18a includes carrier supports 19 that support the workpieces W. Further, the second holding portion 17b is configured to hold the workpieces W at the inspection positions, such as the first inspection position P1, the second inspection position P2, and the like. In the present embodiment, the distances between the carrier supports 19, the distances between the workpieces W held by the first holding portion 17a, and the distances between the workpieces W held by the second holding portion 17b are set to align with the distances between the first inspection position P1, the second inspection position P2, and the third inspection position P3.

The intervals between the first supports 13b of the first conveyor device 13 are smaller than the intervals between the carrier supports 19 of the carrier support member 18a.

Second Conveyor Device

As shown in Figs. 1 and 2, the second conveyor device 15 of the workpiece transport apparatus 11 is arranged at the downstream side of the inspection section 12. The second conveyor device 15 transports the workpieces W unloaded from the inspection section transport device 14. In the same manner as the first conveyor device 13, the second conveyor device 15 includes two second conveyor devices 15 respectively provided for the first end Wa and the second end Wb of the workpiece W. As shown in Fig. 2, each second conveyor device 15 includes an endless second belt 15a and second supports 15b arranged on the second belt 15a. The two second conveyor devices 15 transport the workpieces W such that the longitudinal direction of each workpiece W is orthogonal to the transport direction of the workpiece W in plan view. The second conveyor devices 15 of the present embodiment transport the workpieces W that underwent inspection in the inspection section 12 to a sorting device 20. For example, the sorting device 20 includes a sorting mechanism that separates defective glass tubes from the transport path of non-defective glass tubes.

Controller

The controller 16 determines whether each workpiece W is anomalous based on images obtained by the first image capturing device 12a, the second image capturing device 12b, and the third image capturing device 12c. The first image capturing device 12a, the second image capturing device 12b, and the third image capturing device 12c obtain images of, for example, an end of the workpiece W, the outer circumferential surface of the workpiece W, and the like. The controller 16 includes, for example, an image processor, memory, and the like. For example, the image processor may be configured to perform image processing, such as binary processing, brightness correction, and the like, on images including the workpiece Was necessary. For example, the memory may store in advance images of a normal workpiece W, a brightness threshold value, and the like. The controller 16 may include a processor, memory, software, an image display device, and the like (not shown).

The controller 16 may determine the state of each workpiece W, for example, by comparing a threshold value that is obtained from images of a normal workpiece W stored in the memory in advance with a value that is obtained from actual images captured by the image processor. The controller 16 may use a learning model that is constructed through deep learning in determining whether the workpiece W is anomalous. For example, the learning model is an artificial intelligence (AI) model such as a neural network model. Based on the determination result of the controller 16, the sorting device 20 separates defective workpiece from non-defective workpieces.

Workpiece Transport Method

A method for transporting the workpieces W will now be described along with its main effects.

As shown in Fig. 2, the method for transporting the workpieces W includes a loading step of continuously transporting the workpieces W to the inspection section 12, where the workpieces W are inspected, with the first conveyor device 13. Further, as shown in Figs. 2 to 5, the method for transporting the workpieces W includes an inspection section transporting step of transporting the workpieces W in the inspection section 12 with the inspection section transport device 14.

In the inspection section transporting step of the present embodiment, for example, transportation of the workpieces W is temporarily stopped at the first inspection position P1 where workpieces W are inspected. Specifically, the second holding portion 17b is arranged, for example, at the first inspection position P1 to hold the workpiece W at a predetermined position. By holding the workpiece W in the second holding portion 17b, it becomes possible to inspect the workpiece W in a state in which transportation of the workpiece W is temporarily stopped at the first inspection position P1. The workpiece W can also be inspected at the second inspection position P2 and the third inspection position P3 in a state in which transportation of the workpiece W is temporarily stopped. After the workpiece W is inspected at the first inspection position P1, the workpiece carrier 18 carries the workpiece W again such that inspection is sequentially performed at the second inspection position P2 and the third inspection position P3.

As described above, the method for transporting the workpieces W allows the workpieces W to be inspected at a high degree of accuracy in a state in which transportation of the workpieces W is temporarily stopped, for example, at the first inspection position P1. This improves the accuracy in inspecting the workpieces W.

In the inspection section transporting step, the transport speed of the workpieces W to the first inspection position P1 where the workpieces W are inspected is higher than a loading speed of the workpieces W in the loading step. Thus, even when the workpieces W are transported in above-described inspection section transporting step, it is possible to maintain the loading speed of the workpieces W in the loading step at a predetermined speed or higher. Further, if the transport speed of the workpieces W to the first inspection position P1 is further increased in the inspection section transporting step, for example, the workpieces W can be stopped at the first inspection position P1 for a longer period.

In the inspection section transporting step, the parallel crank mechanism moves the carrier support member 18a. Preferably, the inspection section transporting step includes a stopping phase in which actuation of the parallel crank mechanism is stopped. In this case, the timing of the operation of the workpiece carrier 18 is readily adjusted. For example, the period during which transportation of the workpieces W is temporarily stopped at the first inspection position P1 is readily adjusted.

Operation and advantages of the first embodiment will now be described.

(1-1) The method for transporting the workpieces W includes inspection section transporting step of transporting the workpieces W in the inspection section 12 with the inspection section transport device 14. In the inspection section transporting step, for example, transportation of the workpieces W is temporarily stopped at the first inspection position P1 where the workpieces W are inspected. This method enables improvement of the accuracy in inspecting the workpieces W, for example, at the first inspection position P1.

(1-2) The method for transporting the workpieces W further includes the loading step of continuously transporting the workpieces W to the inspection section 12 with the first conveyor device 13. In the inspection section transporting step, the workpieces W are transported to the first inspection position P1 at a higher transport speed than the loading speed in the loading step. Thus, even when the workpieces W are transported in the above-described inspection section transporting step, it is possible to maintain the loading speed of the workpieces W in the loading step at a predetermined speed or higher. Therefore, it is possible to suppress a decrease in the transport efficiency of the workpieces W.

(1-3) The first supports 13b of the first conveyor device 13 may be selectively used in accordance with, for example, the dimension of the workpiece W. For example, when each workpiece W has a relatively large dimension, every other one of the first supports 13b of the first conveyor device 13 may support the workpieces W to avoid contact between adjacent workpieces W.

In the above embodiment, the intervals between the first supports 13b of the first conveyor device 13 are smaller than the intervals between the carrier supports 19 of the inspection section transport device 14. By setting the intervals between the first supports 13b as described above, the loading speed of the workpieces W to the inspection section 12 can be maintained at a predetermined speed or higher even when, for example, every other first support 13b is used. The number of first supports 13b and the number of carrier supports 19 are each three or more, preferably four or more, and further preferably, five or more.

(1-4) The inspection section transport device 14 includes the second holding portion 17b and the workpiece carrier 18. In this case, the second holding portion 17b holds the workpieces W transported by the workpiece carrier 18 so that transportation of the workpieces W is readily stopped, for example, at the first inspection position P1.

(1-5) The workpiece carrier 18 includes the carrier support member 18a that supports the workpieces W. The carrier support member 18a is moved by the parallel crank mechanism. Thus, the workpieces W are transported with a relatively simple structure.

(1-6) Preferably, the inspection section transporting step includes a stopping phase in which the actuation of the parallel crank mechanism of the workpiece carrier 18 is stopped. In this case, the timing of the operation of the workpiece carrier 18 is readily adjusted. For example, the period during which transportation of the workpieces W is temporarily stopped at the first inspection position P1 is readily adjusted.

(1-7) In the method for transporting the workpieces W, each workpiece W has an elongated shape and is transported such that the longitudinal direction of the workpiece W is orthogonal to the transport direction. This enables improvement of the accuracy in inspecting such elongated workpieces W.

(1-8) The carrier support member 18a of the workpiece carrier 18 is configured to support more than one workpiece W. The second holding portion 17b is configured to hold the workpiece W at each of the inspection positions (such as the first inspection position P1 and the second inspection position P2). In this case, for example, more than one workpiece W can be simultaneously inspected in the inspection section 12. Also, multiple types of inspections may be performed on each workpiece W.

(1-9) The second holding portion 17b of the inspection section transport device 14 includes, for example, the roll mechanism that rolls the workpieces W at the first inspection position P1. In this case, inspection is readily performed along the outer circumference of the workpiece W.

Second Embodiment

A workpiece transport apparatus 11 and a method for transporting workpieces W in accordance with a second embodiment will now be described focusing on differences from the first embodiment.

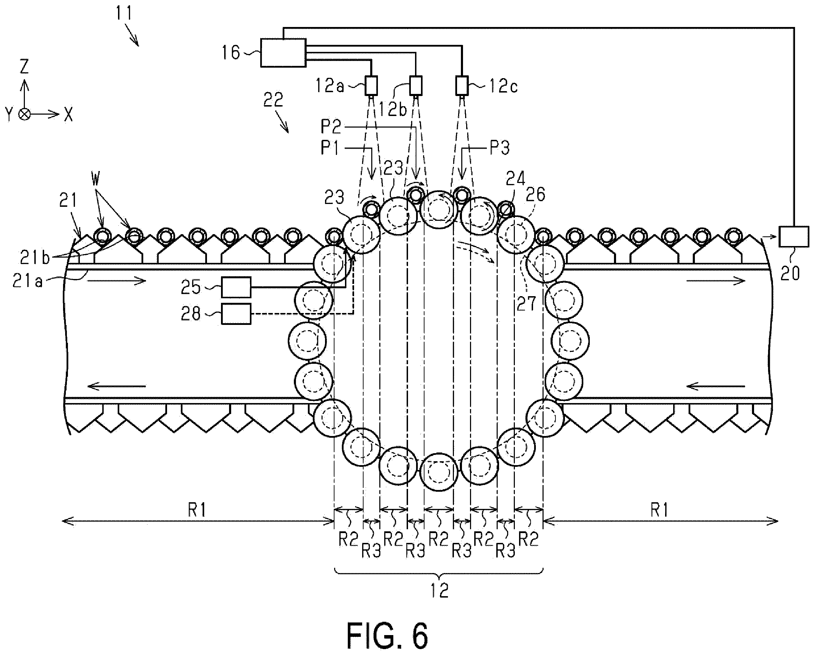

As shown in Fig. 6, the workpiece transport apparatus 11 of the second embodiment includes a third conveyor device 21 that loads the workpieces W to the inspection section 12 and unloads the workpieces W from the inspection section 12. The third conveyor device 21 includes an endless third belt 21a and third supports 21b arranged on the third belt 21a.

The workpiece transport apparatus 11 includes an inspection section transport device 22. The inspection section transport device 22 includes a rotation mechanism that transports the workpieces W along an arc-shaped transport path. The inspection section transport device 22 includes rollers 23 that support the workpieces W such that each workpiece W is rotatable about the axis of the workpieces W. Each workpiece W is supported by a support portion formed by two adjacent ones of the rollers 23. In the example shown in Fig. 6, each roller 23 rotates counterclockwise. In this case, the rollers 23 collectively turn along a circular path in the clockwise direction. The inspection section transport device 22 successively transports the workpieces W along an arc-shaped path in the clockwise direction while rotating each workpiece W about the corresponding axis in the clockwise direction.

Specifically, the inspection section transport device 22 includes a main-mechanism unit 24 that is substantially circular in side view of the inspection section transport device 22, and the rollers 23 are rotatably arranged on the outer circumferential portion of the main-mechanism unit 24. When the main-mechanism unit 24 of the inspection section transport device 22 is rotated by a drive unit 25, the main-mechanism unit 24 turns the rollers 23 collectively. The inspection section transport device 22 having such a structure forms an arc-shaped transport path (arcuate path) that projects upward.

Further, each roller 23 includes a power transmission portion 26, such as a transmission sprocket, a gear, or the like, and is rotated by the driving force transmitted from a sub-mechanism unit 27. The sub-mechanism unit 27 is rotated by a drive unit 28 that differs from the drive unit 25 of the main-mechanism unit 24. This rotates the rollers 23 as described above. Thus, the inspection section transport device 22 of the second embodiment also includes a rolling mechanism that rolls the workpieces W, for example, at the first inspection position P1.

An example of setting the transport speed of the workpieces W in the workpiece transport apparatus 11 of the second embodiment will now be described.

The workpiece transport apparatus 11 includes a first transport region R1 where the workpieces W are transported at a first transport speed S1 with the third conveyor device 21. Further, the inspection section 12 of the workpiece transport apparatus 11 includes a second transport region R2 where the workpieces W are transported at a second transport speed S2, and a third transport region R3 where the workpieces W are transported at a third transport speed S3. The second transport region R2 includes a region from the upstream end of the inspection section 12 to a vicinity of the first inspection position P1, a region from a vicinity of the first inspection position P1 to a vicinity of the second inspection position P2, and a region from a vicinity of the second inspection position P2 to a vicinity of the third inspection position P3. The third transport region R3 corresponds to a range in which the workpiece W starts and ends passing an inspection position, such as the first inspection position P1, the second inspection position P2, or the third inspection position P3.

The first transport speed S1, the second transport speed S2, and the third transport speed S3 satisfy the following relational expression (1).

$$S3 < S1 < S2 ... (1)$$

In this manner, in the inspection section transporting step of the second embodiment, the transport speed of the workpieces W is decreased, for example, at the first inspection position P1. Further, in the inspection section transporting step of the second embodiment, the transport speed of the workpieces W to the first inspection position P1 is higher than the loading speed of the workpieces W in the loading step, in the same manner as the first embodiment.

The operation and advantages of the second embodiment will now be described.

(2-1) In the inspection section transporting step, for example, the transport speed of the workpieces W is decreased at the first inspection position P1. Thus, the workpieces W can be inspected at a high degree of accuracy when the transport speed of workpieces W is decreased at the first inspection position P1. Therefore, it enables improvement of the accuracy in inspecting the workpieces W at the first inspection position P1.

(2-2) The method for transporting the workpieces W further includes the loading step of continuously transporting the workpieces W to the inspection section 12 with the third conveyor device 21. In the inspection section transporting step, the workpieces W are transported to the first inspection position P1 at a higher transport speed than the loading speed of the workpieces W in the loading step. Thus, even when the workpieces W are transported in the above-described inspection section transporting step, it is possible to maintain the loading speed of the workpieces W in the loading step at a predetermined speed or higher. Therefore, it is possible to suppress a decrease in the transport efficiency of the workpieces W.

(2-3) The third conveyor device 21 includes the third supports 21b. The inspection section transport device 22 includes support portions each formed by two adjacent ones of the rollers 23. The intervals between the third supports 21b are smaller than the intervals between the support portions of the inspection section transport device 22. This obtains the same advantage as advantage (1-3) of the first embodiment. The number of third supports 21b of the third conveyor device 21 and the number of support portions of the inspection section transport device 22 are each three or more, preferably four or more, further preferably, five or more.

(2-4) The second embodiment has the same advantages as advantages (1-7) to (1-9) of the first embodiment.

Modified Examples

The above embodiments may be modified as follows. The above embodiments and the following modifications can be combined as long as the combined modifications remain technically consistent with each other.

The elongated workpiece W does not have to have a circular cross section, and the cross-sectional shape may be, for example, elliptical or polygonal.

The workpiece W does not have to has an elongated shape and may be, for example, spherical or polygonal.

The material of the workpiece W is not limited to glass and may be, for example, metal, resin, or ceramics.

The first holding portion 17a may be omitted from the inspection section transport device 14 of the first embodiment. In other words, the workpieces W transported to the inspection section 12 may be directly transported to the first inspection position P1 with the workpiece carrier 18.

In the workpiece carrier 18 of the first embodiment, the carrier support member 18a of the inspection section transport device 14 may be moved by a mechanism that is not the parallel crank mechanism. For example, the carrier support member 18a can be modified such that the carrier support member 18a is movable by a robot arm.

In the second embodiment, the inspection section transport device 22 may be changed to a transport device that performs transportation along a horizontal transport path.

In the second embodiment, the inspection section transport device 22 can temporarily stop transportation of the workpieces W at the inspection positions. In other words, in the method for transporting the workpieces W, the inspection section transport device 22 of the second embodiment may be used to temporarily stop transportation of the workpieces W at the inspection positions in the inspection section transporting step.

In the first embodiment, the intervals between the first supports 13b of the first conveyor device 13 may be greater than or equal to the intervals between the carrier supports 19 of the inspection section transport device 14. Further, the intervals between the second supports 15b of the second conveyor device 15 may be changed.

In the second embodiment, the intervals between the third supports 21b of the third conveyor device 21 may be greater than or equal to the intervals between the support portions of the inspection section transport device 22, each formed by two adjacent rollers 23 supporting one workpiece W.

In the first embodiment, the carrier support member 18a of the inspection section transport device 14 and the second holding portion 17b may each hold a single workpiece W. In the first embodiment, the first conveyor device 13 may have a single first support 13b, and the second conveyor device 15 may have a single second support 15b.

In the second embodiment, the inspection section transport device 22 may support a single workpiece W. In the second embodiment, the third conveyor device may have a single third support 21b.

In the first and second embodiments, the transport speed of the workpieces W to the first inspection position P1 in the inspection section transporting step 12 may be the same as the loading speed of the workpieces W in the loading step. In other words, the loading speed of the workpieces W in the loading step may be changed to match the transport speed of the workpieces W in the inspection section transporting step.

In the first and second embodiments, the inspection section transport devices 14, 22 of the workpiece transport apparatus 11 are arranged as a pair in a direction orthogonal to the transport direction. Instead, the number of inspection section transport devices 14, 22 may be one or three or more.

In the first embodiment, the first conveyor devices 13 of the workpiece transport apparatus 11 are arranged as a pair in a direction orthogonal to the transport direction. Instead, the number of first conveyor devices 13 may be one or three or more. Also, the number of second conveyor devices 15 of the workpiece transport apparatus 11 may be one or three or more.

In the second embodiment, the third conveyor devices 21 of the workpiece transport apparatus 11 are arranged as a pair in a direction orthogonal to the transport direction. Instead, the number of third conveyor devices 21 may be one or three or more.

At the first inspection position P1, the second inspection position P2, and the third inspection position P3 in the inspection section 12, the workpieces W are inspected using images of the workpieces W. Instead, the workpieces W may be inspected visually or using an inspection device other than an image capturing device.

The number of inspection positions in the inspection section 12 does not have to be three and may be one, two, four or more.

REFERENCE SIGNS LIST

11) workpiece transport apparatus; 12) inspection section; 13) first conveyor device; 13b) first support; 14, 22) inspection section transport device; 17b) second holding portion; 18) workpiece carrier; 18a) carrier support member; 19) carrier support; 21) third conveyor device; 21b) third support; P1) first inspection position; P2) second inspection position; P3) third inspection position; W) workpiece

**Claims**

1. A method for transporting workpieces, the method comprising:

   an inspection section transporting step of transporting the workpieces in an inspection section, where the workpieces are inspected, with an inspection section transport device,
   wherein the inspection section transporting step includes decreasing a transport speed of the workpieces at an inspection position where the workpieces are inspected or temporarily stopping transportation of the workpieces at the inspection position.

2. The method for transporting workpieces according to claim 1, further comprising:

   a loading step of continuously loading the workpieces to the inspection section with a conveyor device,
   wherein in the inspection section transporting step, the transport speed of the workpieces to the inspection position is higher than a loading speed of the workpieces in the loading step.

3. The method for transporting workpieces according to claim 2, wherein

   the conveyor device and the inspection section transport device each include supports that support the workpieces, and
   the intervals between the supports of the conveyor device are smaller than the intervals between the supports of the inspection section transport device.

4. The method for transporting workpieces according to any one of claims 1 to 3, wherein:

   the inspection section transport device includes

      a holding unit arranged in correspondence with the inspection position to hold the workpieces, and
      a workpiece carrier that loads the workpieces to the holding unit and unloads the workpieces from the holding unit; and

   in the inspection section transporting step, transportation of the workpieces is temporarily stopped at the inspection position.

5. The method for transporting workpieces according to claim 4, wherein

   the workpiece carrier includes a carrier support member that supports the workpieces, and
   the carrier support member is moved by a parallel crank mechanism.

6. The method for transporting workpieces according to claim 5, wherein the inspection section transporting step includes a stopping phase in which actuation of the parallel crank mechanism is stopped.

7.  The method for transporting workpieces according to any one of claims 1 to 3, wherein the inspection section transport device transports the workpieces along an arc-shaped transport path.

8.  The method for transporting workpieces according to any one of claims 1 to 7, wherein each of the workpieces has an elongated shape and is transported such that a longitudinal direction of the workpieces is orthogonal to a transport direction.

9.  A workpiece transport apparatus, comprising:

    an inspection section transport device that transports workpieces in an inspection section where the workpieces are inspected,
    wherein the inspection section transport device decreases a transport speed of the workpieces at an inspection position where the workpieces are inspected or temporarily stops transportation of the workpieces at the inspection position.

FIG. 1

EP 4 450 428 A1

FIG. 2

FIG. 3

FIG. 4

FIG. 5

FIG. 6

EP 4 450 428 A1

## INTERNATIONAL SEARCH REPORT

| International application No. |
| --- |
| **PCT/JP2022/044459** |

### A. CLASSIFICATION OF SUBJECT MATTER

**B65G 43/00**(2006.01)i; **G01N 21/84**(2006.01)i; **G01N 21/954**(2006.01)i
FI: B65G43/00 D; G01N21/84 C; G01N21/954

According to International Patent Classification (IPC) or to both national classification and IPC

### B. FIELDS SEARCHED

Minimum documentation searched (classification system followed by classification symbols)

B65G43/00; G01N21/84; G01N21/954

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2001-10723 A (KIRIN TECHNO-SYSTEM CORP) 16 January 2001 (2001-01-16) paragraphs [0006]-[0014], fig. 1-4 | 1, 7-9 |
| A | | 2-6 |
| X | JP 2017-49096 A (TOYOTA IND CORP) 09 March 2017 (2017-03-09) paragraphs [0020]-[0064], fig. 1-2 | 1, 9 |
| A | | 2-8 |
| A | JP 2014-80284 A (TOSHIBA IT & CONTROL SYSTEMS CORP) 08 May 2014 (2014-05-08) entire text, all drawings | 1-9 |
| A | JP 2015-197342 A (TECH KK N) 09 November 2015 (2015-11-09) entire text, all drawings | 1-9 |

☐ Further documents are listed in the continuation of Box C.    ☑ See patent family annex.

| | |
| --- | --- |
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **12 January 2023** | **31 January 2023** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

International application No.

**PCT/JP2022/044459**

| Patent document cited in search report | | | Publication date (day/month/year) | Patent family member(s) | Publication date (day/month/year) |
|---|---|---|---|---|---|
| JP | 2001-10723 | A | 16 January 2001 | (Family: none) | |
| JP | 2017-49096 | A | 09 March 2017 | (Family: none) | |
| JP | 2014-80284 | A | 08 May 2014 | (Family: none) | |
| JP | 2015-197342 | A | 09 November 2015 | (Family: none) | |

**EP 4 450 428 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018017547 A